**Europäisches Patentamt**

**European Patent Office**

**Office européen des brevets**

(11) Veröffentlichungsnummer: **0 019 867**
**B1**

(12) **EUROPÄISCHE PATENTSCHRIFT**

(45) Veröffentlichungstag der Patentschrift:
**09.11.83**

(21) Anmeldenummer: **80102869.7**

(22) Anmeldetag: **23.05.80**

(51) Int. Cl.³: **B 29 C 1/00,** B 29 C 5/00

(54) **Giessform zur Herstellung von Formkörpern aus Reaktionsgiessharzen.**

(30) Priorität: **02.06.79 DE 2922675**

(43) Veröffentlichungstag der Anmeldung:
**10.12.80 Patentblatt 80/25**

(45) Bekanntmachung des Hinweises auf die Patenterteilung:
**09.11.83 Patentblatt 83/45**

(84) Benannte Vertragsstaaten:
**AT CH IT LI NL**

(56) Entgegenhaltungen:
**AT - A - 313 568**
**BE - A - 495 628**
**CH - A - 357 191**
**DE - B - 1 208 869**
**FR - A - 1 391 813**
**FR - A - 1 509 783**
**FR - A - 2 178 231**
**GB - A - 978 871**
**US - A - 2 363 779**
**US - A - 2 869 179**
**US - A - 2 876 492**
**US - A - 3 055 058**
**US - A - 3 742 537**

(73) Patentinhaber: **Schock & Co. GmbH, Gmünder Strasse 65, D-7060 Schorndorf (DE)**

(72) Erfinder: **Schock, Karl, Aichenbachstrasse 136, D-7060 Schorndorf (DE)**

(74) Vertreter: **Hoeger, Stellrecht & Partner, Uhlandstrasse 14c, D-7000 Stuttgart 1 (DE)**

Gießform zur Herstellung von Formkörpern aus Reaktionsgießharzen

Die Erfindung betrifft eine Gießform zur Herstellung von Formkörpern aus Reaktionsgießharzen, mit einem von wenigstens zwei Formteilen begrenzten Formhohlraum, welcher zumindest teilweise im Inneren eines ersten der Formteile liegt, in das bei geschlossenem Formhohlraum ein zweites Formteil wenigstens teilweise eintaucht, sowie mit einem der Erzeugung der Formschließkräfte dienenden, mit einem Druckmittel füllbaren Druckkörper, der sich einerseits auf der vom Formhohlraum abgekehrten Seite des einen Formteils und andererseits auf einem Widerlager abstützt.

Es ist schon eine Preßform mit den vorstehend aufgeführten Merkmalen zur Herstellung glasfaserverstärkter Kunststoffteile bekannt geworden (DE-AS 1 251 511), bei der der Druckkörper als fluiddichter Sack ausgebildet ist und eine Formhälfte trägt, die in einem Gestell relativ zur anderen Formhälfte in vertikaler Richtung verschiebbar geführt ist. Die obere Formhälfte wird zum Beschicken der Preßform ganz abgenommen und anschließend wieder aufgelegt, worauf die beiden Formhälften mit Hilfe des Druckkörpers so gegeneinander gepreßt werden, daß sie mit von den Formhälften selbst gebildeten Dichtflächen gegeneinander anliegen. In diesem Zustand wird das Harz dann ausgehärtet. Da alle Kunstharze während des Aushärtens mehr oder minder stark schrumpfen, läßt sich bei der bekannten Preßform nicht vermeiden, daß das Kunstharz mindestens bereichsweise von den Formhohlraumwänden wegschrumpft, und zwar bei der Herstellung von Gegenständen mit variierender Wandstärke auch noch in unterschiedlichem Umfang — das Kunstharz schrumpft nämlich in Bereichen größerer Wandstärke weiter von der Formhohlraumwand weg als in Bereichen geringerer Wandstärken.

Der Erfindung lag die Aufgabe zugrunde, eine Gießform der eingangs erwähnten Art so weiterzubilden, daß mit geringerem Kostenaufwand als bisher dem Schrumpfen der Gießharze während des Aushärtens Rechnung getragen werden kann. Erfindungsgemäß wird diese Aufgabe dadurch gelöst, daß das dem Druckkörper benachbarte Formteil zwischen dem Druckkörper und einer zwischen den beiden Formteilen angeordneten Dichtung schwimmend gehalten ist. Anders als bei der bekannten Preßform folgt bei der erfindungsgemäßen Konstruktion während des Härtens des Gießharzes das eine Formteil unter der Wirkung des vom Druckkörper erzeugten Drucks dem schrumpfenden Gießharz, und wegen der schwimmenden Lagerung des einen Formteils kann dessen Formhohlraumwand dem schrumpfenden Gießharz auch dann überall folgen, wenn letzteres infolge unterschiedlicher Dicken des herzustellenden Gegenstands in verschiedenen Bereichen des Gegenstands unterschiedlich stark schrumpft. Ein weiterer Vorteil der schwimmenden Lagerung des einen Formteils ist darin zu sehen, daß geringe Verzüge der Formteile, die sich bei großen Formen sowie unter dem Einfluß der beim Aushärten des Gießharzes auftretenden Temperaturen in der Praxis nicht vermeiden lassen, den Formhohlraum an der Dichtung nicht undicht werden lassen. Schließlich hat die schwimmende Lagerung des einen Formteils zur Folge, daß gewährleistet ist, daß das Gießharz überall unter dem gleichen Druck erhärtet.

Bei einer erfindungsgemäßen Gießform können sich gegebenenfalls mehrere oder alle Formteile auf einem oder mehreren Druckkörpern abstützen und zwischen einem Druckkörper und dem Gießharz bzw. der Dichtung schwimmend gehalten werden.

Bevorzugt wird eine Gießform, bei der die Dichtung von einem einzigen, um den Formhohlraum umlaufenden, flexiblen und mit einem Druckmittel füllbaren Druckkörper gebildet wird, wobei diese Dichtung an einem der Formteile gehalten wird und gegen einen Wandbereich eines anderen Formteils anliegt, welcher parallel zur Schließrichtung verläuft oder mit dieser einen kleinen Winkel bildet. Die Dichtung wirkt dann wie eine Art Kolbenring, so daß weder große Formschließkräfte erforderlich sind, noch die Dichtung das Nachschieben des einen Formteils zur Kompensation des Schrumpfens des härtenden Harzes behindert. Eine solche, vorzugsweise von einem um den Formhohlraum umlaufenden Schlauch gebildete Dichtung kann auch Unterschiede in der Breite des Spalts zwischen den Formteilen ausgleichen und erlaubt es, die Formteile einander beliebig zu nähern bzw. beliebig weit ineinander zu fahren. Es ist lediglich erforderlich, den Innendruck in der Dichtung etwas größer einzustellen als den im Gießharz herrschenden Druck.

Eine Gießform mit zwischen zwei Platten angeordneten Dichtungen in Form von mit einem Druckmittel füllbaren Schläuchen ist zwar bereits bekannt (US-PS 2 390 129), jedoch handelt es sich dabei um einen völlig anderen Typ von Gießform, und außerdem sollen die Schläuche nach dem Angelieren des Gießharzes drucklos gemacht werden, da das Druckmittel in den Schläuchen nur dem Zweck dient, vor dem Angelieren des Gießharzes den Druck von Spannelementen aufzunehmen, mit deren Hilfe die beiden Platten zusammengepreßt werden; nach dem Entspannen der Schläuche soll der von den Spannelementen auf die beiden Platten ausgeübte Druck nämlich unvermindert auf das Gußstück übertragen werden.

Im folgenden soll eine bevorzugte Ausführungsform der Erfindung anhand der Zeichnung erläutert werden; in der Zeichnung zeigt

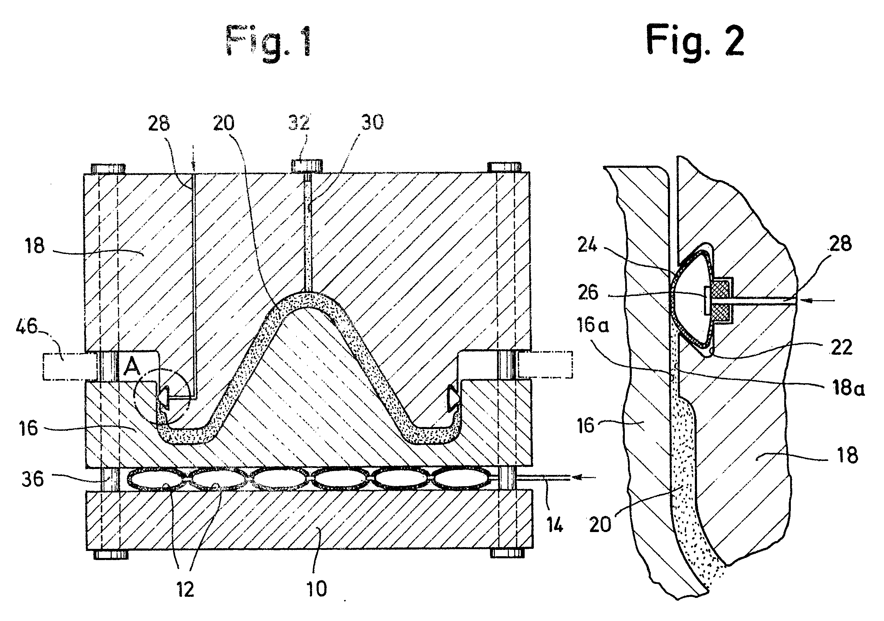

Fig. 1 einen schematischen Vertikalschnitt durch die Gießform und

Fig. 2 den Ausschnitt »A« aus Fig. 1 in größerem Maßstab.

Die Zeichnung läßt eine ein Widerlager 10 bildende Grundplatte erkennen, auf der mehrere Druckkissen 12 angeordnet sind. Es kann sich dabei um Gummikissen oder um Schläuche handeln, beispielsweise um einen üblichen Feuerwehrschlauch oder an den Enden verschlossene Schlauchabschnitte, und die Druckkissen 12 können untereinander verbunden und gemeinsam an eine Preßluftleitung 14 angeschlossen sein; es wäre aber auch möglich, jedes einzelne Druckkissen gesondert an eine Druckmittelleitung anzuschließen, um den Druck in den einzelnen Druckkissen unterschiedlich wählen zu können.

Auf den Druckkissen 12 ruht eine untere Formhälfte 16, welche zusammen mit einer oberen Formhälfte 18 einen Formhohlraum 20 bildet. Zum Beispiel die obere Formhälfte 18 weist eine umlaufende, schwalbenschwanzförmige Haltenut 22 für einen Dichtungsschlauch 24 auf, welcher ein Ventil 26 besitzt und über dieses an eine Preßluftleitung 28 angeschlossen ist. Der Dichtungsschlauch 24 begrenzt also zusammen mit den einander zugekehrten Flächen 16a und 18a der Formhälften 16 und 18 den Formhohlraum 20. Wegen des Verlaufs der Formhohlraumfläche 16a im Bereich des Dichtungsschlauchs 24 ungefähr parallel zur Formschließrichtung wirkt der Dichtungsschlauch 24 wie ein Kolbenring, so daß aus Gründen der Abdichtung keine hohen Formschließkräfte erforderlich sind. Zu dem Formhohlraum 20 führt ein beispielsweise in der oberen Formhälfte 18 vorgesehener Gießkanal 30, welcher nach dem Befüllen des Formhohlraums 20 mit Gießharz durch ein geeignetes Verschlußglied 32 druckdicht verschlossen werden kann.

Grundsätzlich wäre es denkbar, daß die obere Formhälfte 18 lediglich unter ihrem Eigengewicht auf dem den Formhohlraum 20 füllenden Gießharz aufliegt. Zweckmäßigerweise sind jedoch Zuganker 36 vorgesehen, die sich zwischen dem Widerlager 10 und der oberen Formhälfte 18 erstrecken und ein Ausweichen der letzteren nach oben verhindern. Diese Zuganker sollen jedoch keine exakte Parallelführung der beiden Formhälften zueinander bewirken. Der Einstellung einer bestimmten Weite des Formhohlraums 20 und damit der Einstellung der Wanddicke des herzustellenden Kunststoffgegenstands dienen Distanzstücke 46, welche vor bzw. während dem Befüllen des Formhohlraums 20 mit Gießharz zwischen die Formhälften 16 und 18 eingebracht und nach dem Schließen des Gießkanals 30 und dem Angelieren des Gießharzes wieder entfernt werden.

Die Zuganker 36 führen die untere Formhälfte 16 mit einem solchen Spiel, daß die untere Formhälfte schwimmend zwischen den Druckkissen 12 und dem Dichtungsschlauch 24 bzw. dem im Formhohlraum 20 befindlichen Gießharz gehalten wird.

Durch Einstellen eines hinreichend großen Drucks im Dichtungsschlauch 24 wird der Formhohlraum 20 zuverlässig abgedichtet, und zwar auch dann, wenn sich die Formhälften infolge des für die Reaktion des Gießharzes notwendigen Beheizens etwas verziehen, und durch die Einstellung eines geeigneten Drucks in den Druckkissen 12 wird gewährleistet, daß der Formhohlraum 20 entsprechend dem Schrumpfen des Gießharzes verkleinert wird und das Gießharz überall unter gleichem Druck aushärten kann.

Aus dem Vorstehenden wird ersichtlich, wie mit einfachsten Mitteln, nämlich einfachen flexiblen Druckkörpern, eine schwimmende Lagerung eines Formteils erreicht werden kann, so daß dieses dem schrumpfenden Gießharz folgen und Ungenauigkeiten der Formteile kompensieren kann.

**Patentansprüche**

1. Gießform zur Herstellung von Formkörpern aus Reaktionsgießharzen, mit einem von wenigstens zwei Formteilen (16, 18) begrenzten Formhohlraum (20), welcher zumindest teilweise im Innern eines ersten (18) der Formteile liegt, in das bei geschlossenem Formhohlraum ein zweites Formteil (16) wenigstens teilweise eintaucht, sowie mit einem der Erzeugung der Formschließkräfte dienenden, mit einem Druckmittel füllbaren Druckkörper (12), der sich einerseits auf der vom Formhohlraum (26) abgekehrten Seite des einen Formteils (16) und andererseits auf einem Widerlager (10) abstützt, dadurch gekennzeichnet, daß das dem Druckkörper (12) benachbarte Formteil (16) zwischen dem Druckkörper und einer zwischen den beiden Formteilen (16, 18) angeordneten Dichtung (24) schwimmend gehalten ist.

2. Gießform nach Anspruch 1, dadurch gekennzeichnet, daß in an sich bekannter Weise die Dichtung (24) von einem einzigen, um den Formhohlraum (20) umlaufenden, flexiblen und mit einem Druckmittel füllbaren Druckkörper gebildet ist und daß diese Dichtung an einem der beiden Formteile (16, 18) gehalten ist und gegen einen Wandbereich (16a) des anderen Formteils (16) anliegt, welcher parallel zur Schließrichtung verläuft oder mit dieser einen kleinen Winkel bildet.

3. Gießform nach Anspruch 2, dadurch gekennzeichnet, daß eine der Formhälften (16, 18) mit einer vorzugsweise einen Hinterschnitt aufweisenden Nut (22) zur teilweisen Aufnahme des Schlauchs (24) versehen ist.

**Claims**

1. A mould for casting articles from polymerisable synthetic resins, comprising a mould cavity (20) defined by at least two mould parts (16, 18) and lying at least partially inside a first one (18) of the mould parts, into which a second mould part (16) at least partially projects when the mould cavity is closed, and a pressure member (12) which serves to produce the mould locking forces, can be filled with a pressure medium, and is supported on one side on the side of the mould part (16) remote from the mould cavity (20) and on the other side on a support (10), characterised in that the mould part (16) adjacent the pressure member (12) is held in a suspended manner between the pressure member and a seal (24) arranged between the two mould parts (16, 18).

2. A mould according to claim 1, characterised in that the seal (24) is formed in a manner known per se from a single flexible pressure member which surrounds the mould cavity and can be filled with a pressure medium and that this seal is held at one of the two mould parts (16, 18) and rests against a wall region (16a) of the other mould part (16) which extends parallel to the closing direction or forms a small angle with the latter.

3. A mould according to claim 2, characterised in that one of the mould halves (16, 18) is provided with a groove (22), which preferably comprises an undercut, for partially receiving the tube (24).

**Revendications**

1. Moule pour la fabrication par coulage de pièces en résines coulables de réaction, comprenant une cavité (20) qui est délimitée par au moins deux parties de moule (16, 18) et qui est située au moins partiellement à l'intérieur d'une première (18) des parties de moule, dans laquelle une deuxième partie de moule (16) s'enfonce au moins partiellement lorsque la cavité est fermée, ainsi qu'un corps sous pression (12) qui sert à la production des forces de fermeture du moule, peut être rempli d'un agent sous pression et s'appuie, d'une part, sur le côté, orienté à l'opposé de la cavité (20) du moule, d'une des parties de moule (16) et, d'autre part, sur une butée (10), caractérisé en ce que la partie de moule (16) adjacente au corps sous pression (12) est maintenue dans un état flottant entre le corps sous pression et un organe d'étanchéité (24) agencé entre les deux parties de moule (16, 18).

2. Moule suivant la revendication 1, caractérisé en ce que, d'une manière connue en soi, l'organe d'étanchéité (24) est formé d'un unique corps sous pression flexible, qui entoure la cavité (20) du moule et peut être rempli d'un agent sous pression, et en ce que cet organe d'étanchéité est maintenu sur une des deux parties de moule (16, 18) et est en appui contre une zone de paroi (16a) de l'autre partie de moule (16) qui s'étend parallèlement au sens de fermeture ou forme avec ce dernier un petit angle.

3. Moule suivant la revendication 2, caractérisé en ce qu'une des moitiés de moule (16, 18) est pourvue d'une rainure (22), qui présente de préférence une contre-dépouille, pour loger partiellement le tuyau flexible (24).

Fig. 1

Fig. 2

0 019 867